# EUROPEAN PATENT APPLICATION

(11) **EP 4 825 282 A1**
(43) Date of publication of application: **21.10.2026**
(21) Application number: 26172967.7
(22) Date of filing: 17.04.2026
(51) Int. Cl.: A47J 31/60

(54) **METHOD FOR CLEANING A COFFEE DISPENSING CIRCUIT OF A SUPER-AUTOMATIC COFFEE MACHINE AND SUPER-AUTOMATIC COFFEE MACHINE CONFIGURED TO IMPLEMENT SAID METHOD**

(30) Priority: 18.04.2025 IT 202500008811
(71) Applicant: Cimbali Group S.p.A., 20082 Binasco (MI) (IT)
(72) Inventor: Dameno, Marco, 20082 Binasco MI (IT); Vecchio, Paolo, 20082 Binasco MI (IT)
(74) Representative: Perani & Partners S.p.A.

(57) **Abstract**

Method for cleaning a coffee dispensing circuit (1) of a super-automatic coffee machine (100), wherein:
- the coffee dispensing circuit (1) comprises:
- an infusion unit (2) provided with:
- a cylinder (20) defining an infusion cavity (21) having an open top (21a) and a closed bottom (21b)
- a piston (22) insertable in the cylinder (20) through the top (21a) to define an infusion chamber (23),

- a hydraulic line (24) configured to supply a water flow (Fw) into the infusion chamber (23) and discharge the water flow from the infusion chamber (23)

- the method comprises the steps of:
A) bringing the infusion unit (2) into a pre-wash configuration in which the piston (22) is inserted into the cylinder (20) and arranged at the top (21a)
B) supplying a detergent (D) into the infusion chamber (23),
C) diluting or dissolving the detergent (D) by supplying a dose of water (A) into the infusion chamber (23) so as to obtain a detergent solution (S), the supplying of the dose of water (A) taking place in several acts interspersed with pauses,
D) at the end of step C), bringing the infusion unit (2) into a washing configuration in which the piston (22) is in contact with the detergent solution (S),
E) washing the coffee dispensing circuit (1) by supplying hot water along the hydraulic line (24) and through the infusion chamber (23), the hot water passing through the infusion chamber (23) removing the detergent solution (S).

## Description

### Technical Field

The present invention relates to a method for cleaning a coffee dispensing circuit of a super-automatic coffee machine, as well as a super-automatic coffee machine adapted to implement said cleaning method.

### State of the Art

As is known, in automatic hot beverage distribution machines and in professional automatic machines for bars, circuits and specific devices are used for heating and preparing beverages.

Among these machines are super-automatic coffee machines, in which the operator only has the task of interacting with the user interface to obtain the preparation and dispensing of the beverage with the desired coffee taste.

Super-automatic coffee machines are equipped with at least one hopper adapted to contain coffee beans, a grinding unit to reduce the coffee beans to powder, and an infusion unit for the preparation and dispensing of the beverage with the desired coffee taste. Completing the solution will be a hot water generator, an electric pump to send the hot water coming from the boiler to the infusion unit, and a dispensing point through which the coffee can be dispensed into a cup. Obviously, the preparation circuit also comprises valve means to manage the circuit layout.

In the specific case of preparing espresso coffee, the infusion unit is normally constituted by a cylinder inside which two opposing pistons are accommodated, which can be reciprocally moved toward and away from each other along the axis of the cylinder during the preparation of the espresso coffee.

Between the pistons and the cylinder, an infusion chamber is formed which, during dispensing, is loaded with the coffee powder produced by the grinding unit. In the upper piston, a conduction channel is formed, adapted to receive a dose of pressurized hot water coming from the boiler, so as to be able to infuse the coffee powder when the latter is present in the infusion unit. In the lower piston, a similar channel is also formed with the purpose of directing the brew formed in the infusion unit towards a dispensing spout at which the cup for collecting the beverage is located.

In order for the circuit for the preparation and dispensing of coffee-flavored beverages to work correctly, it is necessary to perform periodic cleaning and sanitizing operations in accordance with the provisions of the machine manufacturer.

The cleaning of the internal circuits of the machine is performed by making the cleaning and sanitizing liquid flow therein. In detail, the washing of the internal conduction lines of the coffee machine provides for the connection, by means of special interception valves, with one or more external sources containing washing solutions constituted by a liquid solvent in which a detergent solute is dissolved, adapted for the removal of limescale and/or coffee and/or the cleaning of the conduction lines.

In the known art, there are several documents in which the ordinary maintenance of the circuits for the preparation of beverages is described.

For example, in document US20090293733A1, the maintenance of the internal circuits of a coffee machine is described through the mixing of a solute with mains water and sending the mixture obtained to the hydraulic circuits related to the conduction and treatment of milk and coffee.

In the machine described in US20090293733A1, the detergent solution is made in a suitable tank where the mixing of the water with the detergent solute takes place. The detergent solution thus obtained is then made to flow along the internal circuit of the coffee machine and, after having passed through the infusion chamber, is conveyed into a drain basin or immediately reused for a second cleaning cycle.

However, the solution described in US20090293733A1 is not free from drawbacks as it complicates the architecture of the machine, requiring the introduction of the mixing and draining tanks.

### Object of the Invention

In this context, the technical task underlying the present invention is to propose a method for cleaning a coffee dispensing circuit of a super-automatic coffee machine and a super-automatic coffee machine that overcome the drawbacks of the known art cited above.

In particular, an object of the present invention is to provide a method for cleaning the coffee dispensing circuit that can be performed autonomously by a super-automatic coffee machine of simple construction.

A further object of the present invention is to provide a method for cleaning the coffee dispensing circuit of a super-automatic coffee machine that is effective and efficient.

It is also an object of the present invention to provide a super-automatic coffee machine, capable of autonomously performing the cleaning and sanitizing operations of the coffee dispensing circuit, which is of simple construction.

A further object of the present invention is to provide a super-automatic coffee machine capable of efficiently and effectively performing the cleaning and sanitizing operations of the coffee dispensing circuit.

It is also an object of the present invention to provide a method for cleaning the coffee dispensing circuit of a super-automatic coffee machine and a super-automatic coffee machine capable of reducing detergent consumption, while at the same time optimizing the effectiveness of cleaning and sanitizing the dispensing circuit.

### SUMMARY OF THE INVENTION

In accordance with the present invention, the indicated technical task and the specified objects are achieved by a method for cleaning a coffee dispensing circuit of a super-automatic coffee machine and a super-automatic coffee machine according to one or more of the claims reported below.

In particular, the present invention proposes to implement a cleaning method which, after having brought the infusion unit into a pre-wash configuration in which the piston is inserted in the cylinder and arranged at its top, provides for first supplying a detergent into the infusion chamber and then, in several acts interspersed with pauses, a predetermined dose of water. By doing so, the detergent is diluted or dissolved by the water, originating a detergent solution directly in the infusion chamber.

Once the detergent solution is obtained, the method then provides for bringing the infusion unit into a washing configuration in which the piston is in contact with the detergent solution and then supplying hot water to gradually remove the detergent solution from the infusion chamber.

It should be noted that the addition of water in several acts interspersed with pauses facilitates the mixing between the detergent (solute) and the water (solvent), thus improving both the efficacy and the efficiency of the cleaning and sanitizing process of the coffee dispensing circuit.

It should also be noted that the mixing between the detergent and the water occurs in the infusion chamber formed between the cylinder and the piston and not in one or more special tanks as in US20090293733A1. The method object of the present invention is therefore also implementable in a simple super-automatic coffee machine not provided with special mixing and draining tanks.

From the above, it emerges that the method object of the present invention, in addition to ensuring an efficient and effective cleaning and sanitizing process of the coffee dispensing circuit, is implementable in a coffee machine of simple architecture.

### LIST OF FIGURES

Further characteristics and advantages of the present invention will become clearer from the indicative, and therefore non-limiting, description of a preferred but not exclusive embodiment of a method for cleaning a coffee dispensing circuit of a super-automatic coffee machine and of a super-automatic coffee machine, as illustrated in the accompanying drawings in which:
- Figure 1 shows a schematic representation of the layout of a super-automatic coffee machine according to a first embodiment in accordance with the present invention,
- Figure 2 shows a schematic representation of the layout of a super-automatic coffee machine according to a second embodiment in accordance with the present invention,
- Figure 3 shows a side sectional view of the infusion unit of the super-automatic coffee machines schematized in Figures 1 and 2 in a rest configuration,
- Figure 4 shows a side sectional view of the infusion unit of the super-automatic coffee machines schematized in Figures 1 and 2 in a rest configuration,
- Figure 5 shows a side sectional view of the infusion unit of the super-automatic coffee machines schematized in Figures 1 and 2 in a washing configuration,

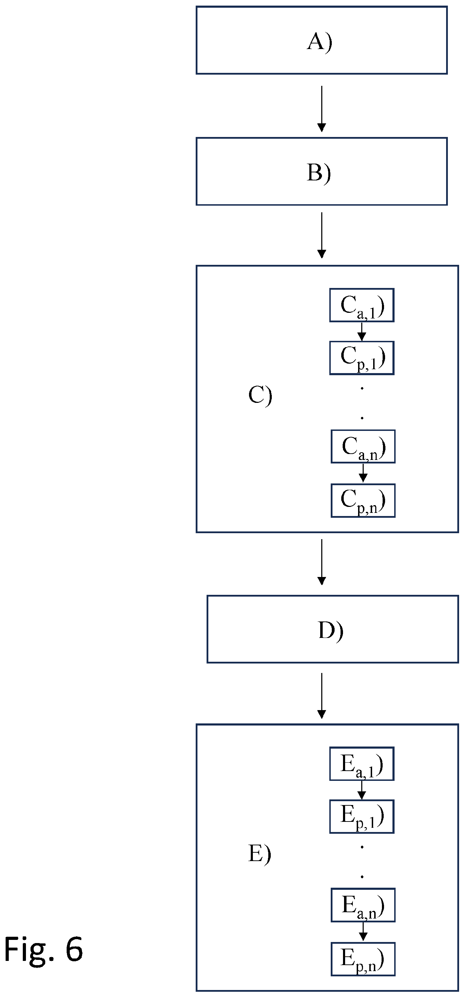

- Figure 6 shows a block diagram of a method for cleaning a coffee dispensing circuit of a super-automatic coffee machine according to an embodiment of the present invention,

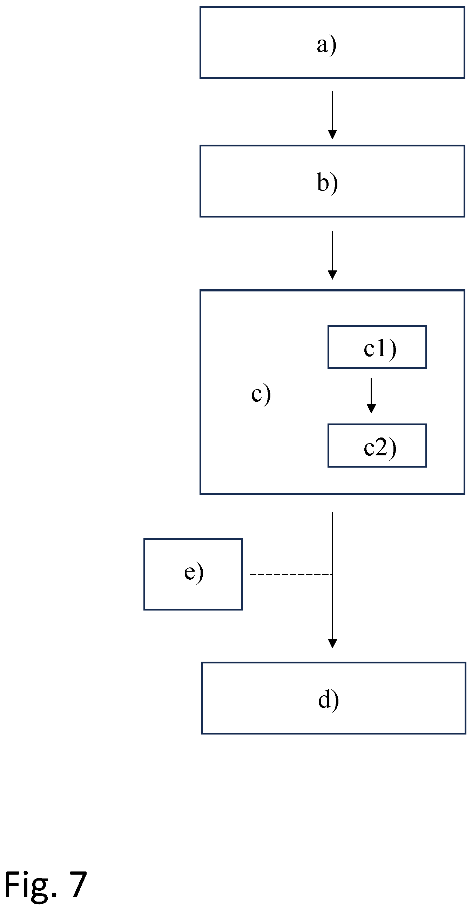

- Figura 7 shows a block diagram of a method for cleaning a second dispensing circuit of the super-automatic coffee machine of Figure 2.

### DETAILED DESCRIPTION

The present description relates to a method for cleaning a coffee dispensing circuit 1 of a super-automatic coffee machine 100, as well as a super-automatic coffee machine 100 configured to implement said method.

In the following, the features of the 100 super-automatic coffee machine will first be described, followed by a focus on the method for cleaning its coffee dispensing circuit 1.

In the context of the present description, by "super-automatic coffee machine 100" is meant to indicate a type of coffee machine in which the user only has the task of interacting with a user interface (not shown in the figures) to obtain the preparation and dispensing of the coffee-flavored beverage. Therefore, in use, the user is only required to select the desired beverage, it will then be the super-automatic coffee machine 100 that autonomously performs all the necessary steps for the preparation and dispensing of the selected beverage.

The super-automatic coffee machine 100 described herein, in addition to coffee-flavored beverages (e.g. espresso coffee, macchiato coffee, cappuccino... etc), can also be configured to dispense other types of hot beverages such as, for example, herbal teas, tea, milk, chocolates, or even simple hot water.

The super-automatic coffee machine 100 (hereinafter, also "coffee machine 100" or simply "machine 100") is supplied by a water source 8 adapted to be used, not only in the production of coffee-flavored beverages or other hot beverages, but also in the cleaning and sanitizing procedures of its hydraulic circuits (e.g. coffee dispensing circuit 1 or milk foaming circuit 7). Said water source 8 can be either the water mains adapted to supply water under pressure or a tank integrated in the coffee machine 100.

The machine 100 comprises a coffee dispensing circuit 1 configured to transform the water supplied by the water source 8 into the coffee-flavored beverage selected by the user, dispensed into a cup or small cup through a special dispensing spout 1a.

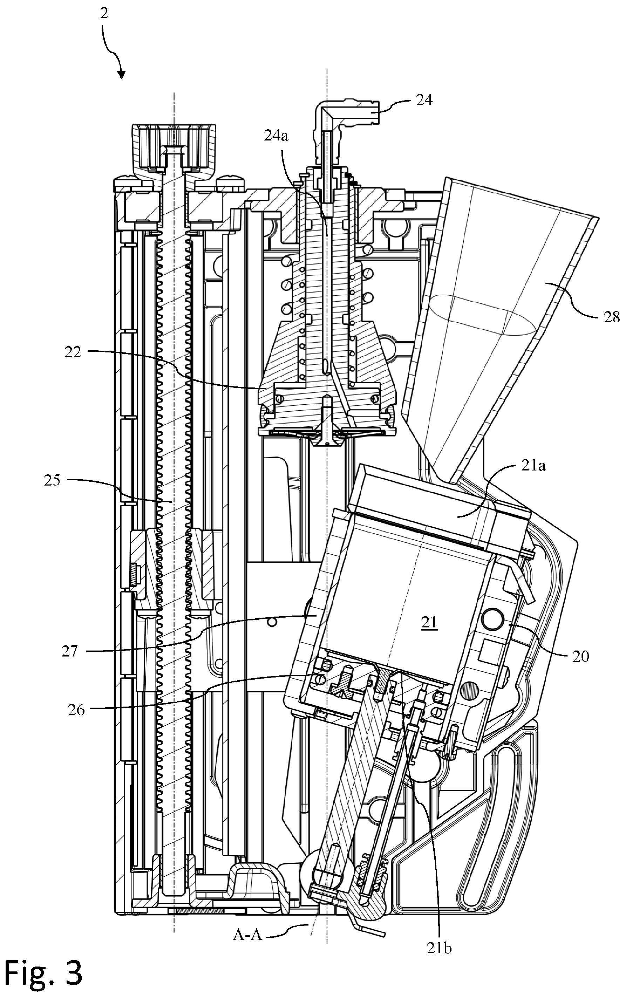

With reference to figures 3-5, the coffee dispensing circuit 1 comprises an infusion unit 2 provided with a cylinder 20, at least one piston 22 insertable in the cylinder 20, and kinematic members 25 adapted to relatively move the cylinder 20 and the piston 22.

The cylinder 20 defines an infusion cavity 21 having an open top 21a and a closed bottom 21b. In use, the infusion cavity 21 is loaded through the top 21a with a dose of ground coffee, obtained, for example, by means of a grinding process performed by a grinding group (not shown in the figures) of the machine 100 fed by a hopper (not shown in the figures) containing coffee beans.

In the embodiment shown in figures 3-5, the bottom 21b of the cylinder 20 is defined by a second piston 26 opposable to the piston 22.

In greater detail, still with reference to the embodiment shown in figures 3-5, the cylinder 20 is formed by a cylindrical body 27 extending along an axial direction A-A between: a lower portion closed by the second piston 26 which defines its bottom 21b, and an upper portion open which defines its open top 21a.

The piston 22 has a conformation that allows it to be inserted into the cylinder 20 through the open top 21a. When the piston 22 is inserted in the cylinder 20 it defines with the latter an infusion chamber 23 in which, during the process of producing the coffee-flavored beverage, the hot water comes into contact with the ground coffee previously loaded to extract its aromas and organoleptic properties.

According to one aspect, the insertion of the piston 22 through the open top 21a of the cylinder 20 occurs by means of a movement of the cylinder 20 with respect to the piston 22.

According to a further aspect, during the operation of inserting the piston 22 into the cylinder 20, the piston 22 is stationary and it is the cylinder 20 that moves to and from the piston 22.

When inserted in the cylinder 20, the piston 22 thus closes the infusion cavity 21 from the part opposite the bottom 21b, defining the infusion chamber 23.

Moreover, when the piston 22 is inserted in the cylinder 20, the piston 22 and the cylinder 20 are reciprocally movable along a movement direction X-X - which, according to one aspect, is coincident with the axial direction A-A - so that, by moving the piston 22 toward/away from the bottom 21b, it is possible to contract or expand the infusion chamber 23. In other words, the infusion chamber 23 has a variable volume (cubature) as a function of the position of the piston 22 with respect to the bottom 21b.

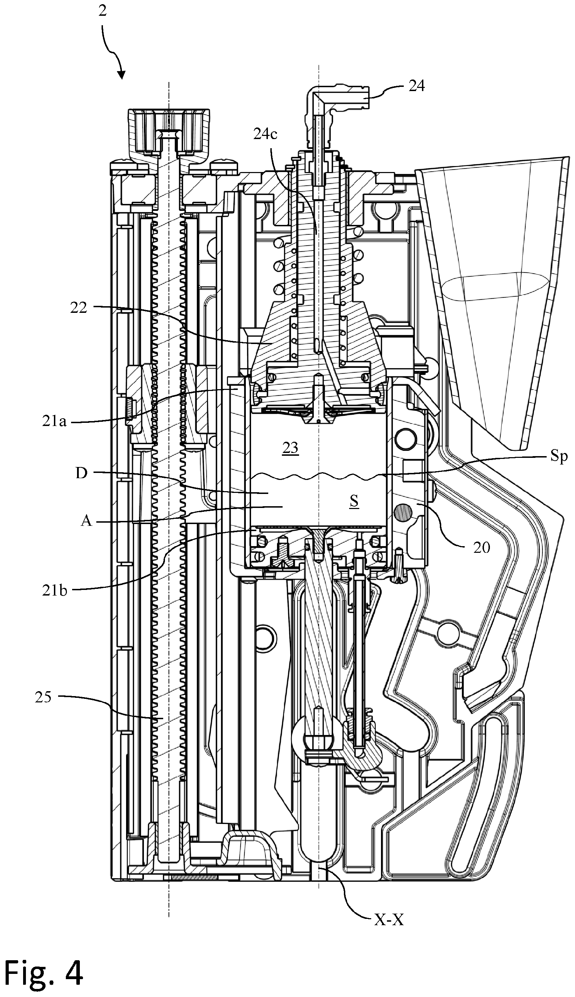

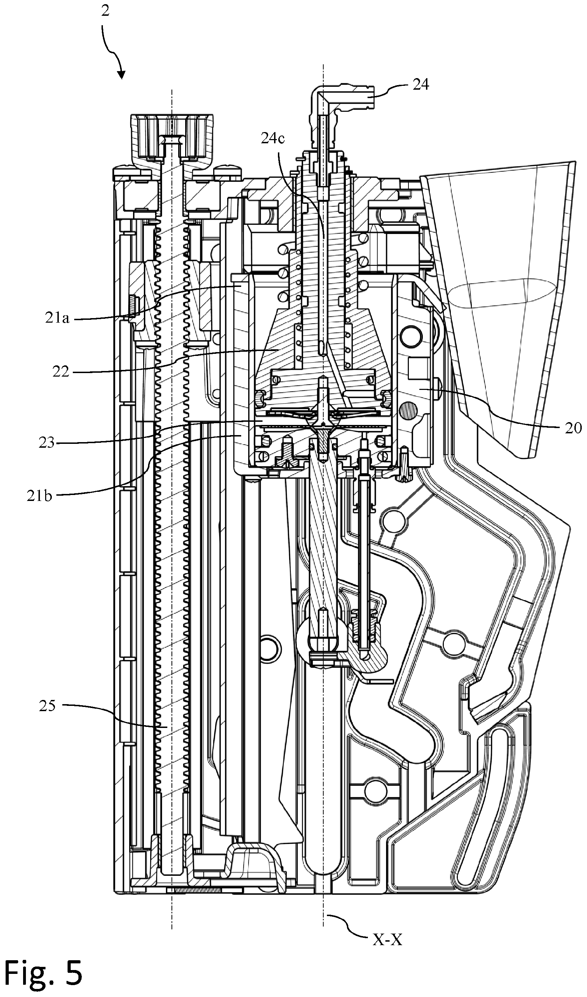

The infusion unit 2 also comprises kinematic members 25 configured to move the cylinder 20 relative to the piston 22 to switch the infusion unit 2 between at least a pre-wash configuration, in which the piston 22 is inserted in the cylinder 20 and arranged at the top 21a (figure 4), and a washing configuration, in which the piston 22 is closer to the bottom 21b with respect to the pre-wash configuration (figure 5) so that, during the washing of the coffee dispensing circuit, the piston 22 comes into contact with a detergent solution S formed in the infusion chamber 23.

Further details regarding the position of the piston in the washing configuration during the washing process of the coffee dispensing circuit will be provided in a subsequent part of the description. For now, it is sufficient to know that, in the washing configuration, the piston 22 is inserted further into the cylinder 20 along the axial direction A-A, with respect to the pre-wash configuration. Therefore, in the washing configuration the volume of the infusion chamber 23 is smaller than that of the pre-wash configuration.

According to one aspect, the kinematic members 25 are configured to translate the cylinder 20 relative to the piston 22 along the movement direction X-X and to rotate the cylinder 20 with respect to the piston 22, so as to bring the infusion unit 2 into a rest configuration (figure 3) in which the cylinder 20 is misaligned with respect to the piston 22. In the rest configuration, the top 21a is free and the cylinder 20 can be loaded with the dose of ground coffee, for example by means of a funnel body 28. In other words, according to one aspect, the kinematic members 25 are configured to move the cylinder 20 in a roto-translatory motion with respect to the piston 22 to switch the infusion unit 2 between the pre-wash, washing and rest configurations.

In the embodiment shown in figures 3-5, the kinematic members 25 comprise motorization means, a recirculating ball screw mechanism actuated by the motorization means, and hinge elements.

According to one aspect, the kinematic members 25 comprise grooves or guides formed on a frame of the infusion group configured to guide the roto-translatory motion of the cylinder 20 with respect to the piston 22. The kinematic members 25 will not be further described as a person skilled in the art would be able to design them autonomously.

The coffee machine 100 comprises a hydraulic line 24 configured to allow the introduction and discharge of liquids into and from the infusion chamber 23.

During the production of beverages, the hydraulic line 24 is engaged to supply hot water into the infusion chamber 23 and to discharge the hot beverage obtained through the dispensing spout 1a.

As will emerge more clearly below, during the washing of the coffee dispensing circuit 1, the hydraulic line 24 is used to supply a water flow Fw into the infusion chamber 23 and to discharge the water flow Fw supplied from the infusion chamber 23.

The coffee machine 100 also comprises heating members 3 (e.g. boiler), arranged on the hydraulic line 24 upstream of the infusion chamber 23, configured to heat the water flow Fw directed towards the infusion chamber 23.

The hydraulic line 24 may also comprise a branch 29, interposed between the heating members and the infusion chamber 23, configured to dispense hot water should this be the beverage requested by the user. In this case, special valve members 24b are provided to selectively supply the flow of hot water to the branch 29 and/or to the infusion chamber 23.

According to an aspect shown in the embodiment of figures 3-5, the hydraulic line 24 comprises, upstream of the infusion chamber 23, a supply section 24c formed in the piston 22.

According to a further aspect, the hydraulic line 24 comprises, downstream of the infusion chamber 23, a discharge section formed in the second piston 26.

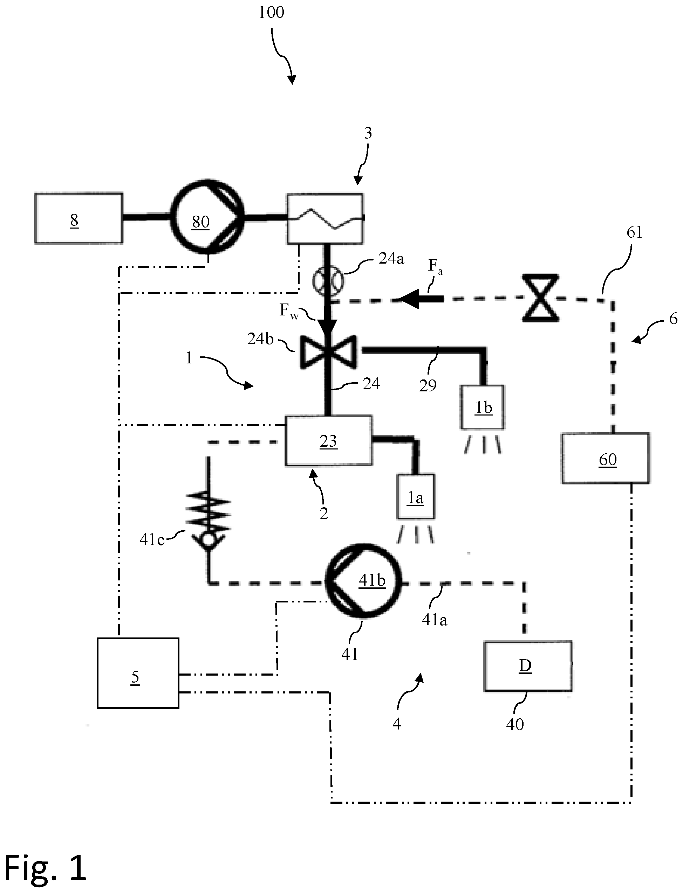

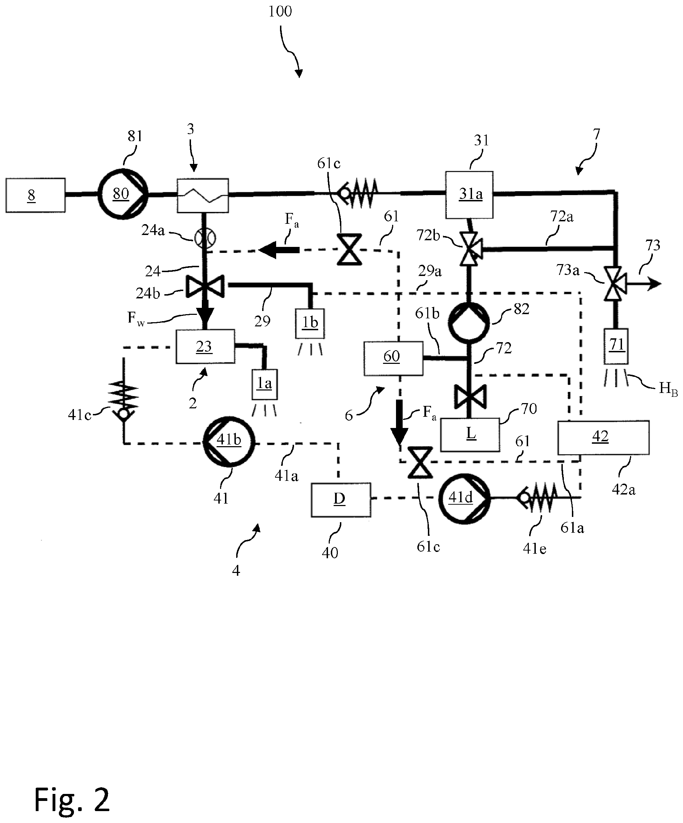

As shown in figures 1 and 2, the machine 100 also comprises a washing system 4 usable in the periodic maintenance operations in which the coffee dispensing circuit 1 is washed and sanitized.

It is worth specifying that in the context of the present description the terms "washing/to wash", "sanitized/to sanitize", "cleaning/to clean" are to be understood as synonyms describing the same phenomenon of cleaning the circuits of the machine 100.

The washing system 4 is equipped with a reservoir 40 adapted to contain a detergent D (solute) which, when dissolved or diluted in water (solvent), generates a detergent solution S usable for the removal of limescale and/or coffee and/or in the cleaning/sanitizing of the coffee dispensing circuit 1.

The detergent D can be in both liquid form and solid form (e.g. in tablets). It is worth specifying that detergents D in liquid form are preferable as those in solid form can lead to the formation of solid residues that could obstruct the hydraulic line 24.

The washing system 4 also comprises detergent supply members 41 configured to supply the detergent D from the reservoir 40 to the infusion chamber 23.

In the embodiment shown in figures 1 and 2, the detergent supply members 41 comprise a detergent hydraulic line 41a fluid-dynamically connecting the reservoir 40 with the infusion chamber 23, and an electric pump 41b arranged along the detergent hydraulic line 41a.

The detergent supply members 41 may also be provided with a non-return valve 41c arranged on the detergent hydraulic line 41a downstream of the electric pump 41b and upstream of the infusion chamber 23.

In the embodiment where the machine 100, in addition to coffee-flavored beverages, is configured to prepare other types of beverages, the machine 100 also comprises a second dispensing circuit 7 configured to dispense the beverage selected by the user (e.g. milk or hot chocolate) or a component thereof (e.g. frothed milk for cappuccino).

According to one aspect, the second dispensing circuit 7 is a milk dispensing circuit configured to dispense hot frothed or non-frothed milk depending on the user's selection.

With reference to the embodiment shown in figure 2, the second dispensing circuit 7 comprises a source 70 containing or configured to supply a liquid L.

If the liquid L is milk or any other liquid to be kept at low temperatures, the source 70 preferably comprises a refrigerated container.

Still with reference to the embodiment shown in figure 2, the second dispensing circuit 7 also comprises: a dispensing nozzle 71 for dispensing a beverage, in particular a hot beverage H_{B}, obtained from the liquid L; a secondary hydraulic line 72 fluid-dynamically connecting the source 70 to the dispensing nozzle 71; and heating means 31, arranged along the secondary hydraulic line 72, configured to heat the liquid L and transform it into the hot beverage H_{B} to be dispensed.

If the machine 100 also provides for the dispensing of cold beverages, the secondary hydraulic line 72 has a bypass section 72a configured to allow the flow of the liquid L to bypass the heating means 31. In this case, a three-way valve 72b is present along the secondary hydraulic line 72, configured to selectively direct the liquid towards the heating means 31 or towards the bypass section 72a.

In the embodiment of figure 2, the heating means 31 comprise a heating chamber 31a configured to receive steam from the heating members 3 of the coffee dispensing circuit 1. During dispensing, the liquid L passes through the heating chamber 31a where, by receiving heat from the steam coming from the heating members 3, it increases its temperature, becoming the desired hot beverage H_{B}.

The washing system 4 of the coffee machine 100 can also be configured to wash and sanitize the second dispensing circuit 7.

For this purpose, in the embodiment of figure 2, the washing system 4 comprises a mixing chamber 42 configured to receive the detergent D and water A which, by mixing there, give rise to the detergent solution S.

The mixing chamber 42 is therefore placed in fluid communication with: the reservoir 40 from which it receives the detergent D, for example by means of the action of a first pump 41d downstream of which a non-return valve 41e can be arranged; and the water source 8 from which it receives the water A, for example by means of the action of a second pump 81.

According to an aspect shown in figure 2, the mixing chamber 42 is placed in fluid communication with the second pump 81 through an extension 29a of the branch 29 of the hydraulic line 24.

The mixing chamber 42 is also placed in fluid communication with the secondary hydraulic line 72, to which it is configured to feed its content.

According to one aspect, the machine 100 comprises a third pump 82 which, during the dispensing of the beverage, is configured to make the liquid L flow from the source 70 along the secondary hydraulic line 72, while, during the cleaning operations, it feeds the content of the mixing chamber 42 along the secondary hydraulic line 72.

According to one aspect, the mixing chamber 42 is identified by a tray 42a which is open at the top and arranged below the dispensing nozzle 71 so as to be able to receive any liquid flows exiting from the latter.

In the embodiments shown in figures 1 and 2, the machine 100 also comprises a pressurized air supply circuit 6 provided with pumping means 60 configured to generate a pressurized air flow Fa, and a pneumatic line 61 adapted to convey the pressurized air flow Fa from the pumping means 60 to the infusion chamber 23.

If the machine 100 is provided with the second dispensing circuit 7, the pneumatic line 61 is also configured to convey the pressurized air flow Fa into the mixing chamber 42.

According to one aspect, if the second dispensing circuit 7 is used to froth milk, the pneumatic line 61 is also configured to supply the pressurized air flow Fa into the secondary hydraulic line 72 and froth the milk flowing therein. To this end, in the embodiment shown in figure 2, the pneumatic line 61 has a first and a second pneumatic section 61a, 61b fluid-dynamically connecting the pumping means 60 with the mixing chamber 42 and the secondary hydraulic line 72, respectively.

The path taken by the pressurized air flow Fa generated by the pumping means 60 is controlled by one or more valve means61c arranged along the pneumatic line 61.

The machine 100 also comprises an electronic control unit 5 placed in signal communication with: the detergent supply members 41 of the washing system 4, the kinematic members 25 of the infusion unit 2, the heating members 3 and, if the machine 100 is provided with it, with the pumping means 60 of the pressurized air supply circuit 6.

If the machine 100 also comprises the second dispensing circuit 7, the electronic control unit 5 is also placed in signal communication with the pumping members (i.e. the first pump 41d, the second pump 81, the third pump 82) and, possibly, also with the three-way valve 72b and/or the heating means 31.

The electronic control unit 5 is configured to implement the method for cleaning the coffee dispensing circuit 1 and, if present, of the second dispensing circuit 7, described below.

The method for cleaning the coffee dispensing circuit 1 provides first of all for bringing the infusion unit 2 into the pre-wash configuration, in which, according to the above, the piston 22 is inserted in the cylinder 20 and with it defines the infusion chamber 23 (step A).

According to one aspect, in step A), the electronic control unit 5 actuates the kinematic members 25 to move the cylinder 20 relative to the piston 22 so as to switch the infusion unit 2 from the rest configuration (figure 3) to the pre-wash configuration (figure 4).

It is worth specifying that, during the execution of the cleaning method, net of any coffee residues, the infusion cavity 21 of the cylinder 20 is empty, i.e. it is not loaded with coffee powder.

Once the infusion unit 2 has been brought into the pre-wash configuration, a predetermined dose of detergent D - for example, equal to 10 ml - is supplied into the infusion chamber 23 (step B).

According to one aspect, in step B), the electronic control unit 5 actuates the electric pump 41b of the detergent supply members 41 for a specific time interval - for example, comprised between 4 and 6 seconds, but preferably equal to 5 seconds to draw the dose of detergent from the reservoir 40 and supply it to the infusion chamber 23 through the detergent hydraulic line 41a.

The method then provides for diluting or dissolving the detergent D by supplying a predetermined dose of hot water A - for example, comprised between 25 and 35 ml, but preferably equal to 30 ml - into the infusion chamber 23 through the hydraulic line 24, so as to obtain the detergent solution S described above (step C).

According to one aspect, the supplying of the dose of water A takes place in several supply acts interspersed with pauses. That is to say that the dose of water A is not supplied all at once but in sub-doses (A1, A2, ... An) supplied in successive and distinct supply acts interspersed with pauses, for example with a duration comprised between 0.1 and 1.5 seconds, in which there is no water supply into the infusion chamber 23. In other words, the supplying of the dose of water A is intermittent.

Advantageously, this mode of supplying the water A improves the mixing with the detergent D, thus improving the efficiency and effectiveness of the cleaning and sanitizing of the coffee dispensing circuit 1.

According to one aspect, in step C), the electronic control unit 5 intermittently actuates a water pump 80 configured to draw the water from the source 8 and supply it into the infusion chamber 23 through the hydraulic line 24.

In the embodiment of figure 2, the water pump 80 coincides with the second pump 81.

According to a further aspect, the electronic control unit 5 is configured to actuate the water pump 80 as a function of the signal from a flow meter 24a arranged along the hydraulic line 24 and also placed in signal communication with the electronic control unit 5.

Preferably, in each supply act A1, A2, ... An an equal sub-dose of water is supplied. Therefore, preferably, the supply acts are identical.

Moreover, preferably, the pauses separating the supply acts all have the same duration.

A good mixing between detergent D and water A is obtainable already with three supply acts - for example, each bringing 10 ml of water into the infusion chamber 23 if the dose of water A is equal to 30 ml.

Regarding the duration of the pauses, if the infusion chamber 23 is substantially at atmospheric pressure, it is preferable that it has a duration greater than 1 second to ensure good mixing between detergent D and water A.

To accelerate and improve the mixing between detergent D and water A, the air flow Fa is supplied into the infusion chamber 23 during step C) of diluting or dissolving the detergent D. Therefore, preferably, the infusion chamber 23 is at least partially brought to a pressure greater than atmospheric pressure during step C).

Thanks to the supply of the air flow Fa into the infusion chamber 3, it is possible to reduce the duration of the pauses separating the supply acts to below 1 second.

To supply the air flow Fa into the infusion chamber 23, according to one aspect, the electronic control unit 5 is configured to actuate the pumping means 60 and, if present, to appropriately command the valve means 61c.

At the end of the step of diluting and dissolving the detergent D, the method provides for reciprocally moving the cylinder 20 and the piston 22 along the movement direction X-X to bring the infusion unit 2 into the washing configuration, in which, according to the above, the piston 22 is in contact with the detergent solution S (step D).

If, downstream of the step of diluting and dissolving the detergent, one were already in the washing configuration, or if the piston 22 were already in contact with the detergent solution S, the method does not provide for the execution of step D) to pass directly to step E) described below.

Preferably, in the washing configuration 22 the piston is at the free surface Sp of the detergent solution S. Therefore, preferably, in step D), the cylinder 20 is moved along the movement direction X-X until the piston 22 reaches the free surface Sp of the detergent solution S.

According to one aspect, in step D), the electronic control unit 5 actuates the kinematic members 25 to move the cylinder 20 relative to the piston 22 so as to switch the infusion unit 2 from the pre-wash configuration (figure 4) to the washing configuration (figure 5).

The method then provides for washing the coffee dispensing circuit 1 by supplying hot water along the hydraulic line 24 and through the infusion chamber 23 of the infusion unit 2 (step E). Passing through the infusion chamber 23, the hot water supplied gradually removes the detergent solution S and transports it along the section of the hydraulic line 24 downstream of the infusion chamber 2.

According to one aspect, in step E), the electronic control unit 5 actuates the heating members 3 and the water pump 80 configured to draw the water from the source 8 and supply it into the infusion chamber 23 through the hydraulic line 24.

Preferably, the washing step E) is carried out by alternating water supply steps Ea), in which the hot water is supplied along the hydraulic line 24 and through the infusion chamber 23, with pause steps Ep), in which said supply of hot water is stopped. That is to say, the washing step E) is carried out in successive acts of supplying hot water interspersed with pauses in which no dispensing occurs.

Advantageously, the washing step E) carried out by alternating water supply steps Ea) with pause steps Ep) allows for making the washing process more efficient, reducing the quantity of water used for washing.

According to one aspect, in each water supply step Ea,1), Ea,2), ... Ea,n) the same quantity of water is supplied. Therefore, if in step E) a total of 200 ml of water is supplied, to each water supply step Ea,1), Ea,2), ... Ea,n) a quantity equal to 200/n ml is supplied, where n is the number of supply steps.

Preferably, the number of supply steps is between 5 and 10.

The quantity of water supplied for each supply step Ea) is for example measured by means of the flow meter 24a.

According to a further aspect, the pause steps Ep,1), Ep,2)... Ep,n) that divide the supply steps all have the same duration, for example 30 seconds.

A good washing is obtainable already with 5 supply steps Ea), interspersed with pause steps Ep) each having a duration of 8 seconds.

At the end of the washing step E), the infusion unit 2 is brought back to the rest configuration, where the infusion cavity 21 can be loaded with a dose of coffee powder.

In the event that the machine 100 also comprises a second dispensing circuit 7, a cleaning method for the latter is described below.

The method for cleaning the second dispensing circuit 7 - which, preferably, is a circuit for dispensing milk (e.g. hot milk, frothed milk, cold milk) - provides first of all for supplying the detergent D - for example, in a quantity equal to 20 ml - into the mixing chamber 42 (step a).

According to one aspect, in step a), the electronic control unit 5 is configured to actuate the first pump 41d to draw a determined dose of detergent from the reservoir 40 and supply it to the mixing chamber 42.

The dosage of the detergent D supplied in step a) can for example be performed by controlling the activation time of the first pump 41d.

The method for cleaning the second dispensing circuit 7 then provides for supplying water A - for example, in a quantity equal to 500 ml - into the mixing chamber 42 and waiting for a specific mixing time interval - for example, equal to 3 seconds to allow the detergent to mix with the water A to originate the detergent solution S (step b).

According to one aspect, in step b), the electronic control unit 5 is configured to actuate the second pump 81 to supply a determined dose of water drawn from the water source 8 into the mixing chamber 42.

To accelerate and improve the mixing between water A and detergent D, in the mixing time interval of step b) pressurized air is supplied into the mixing chamber 42. Therefore, preferably, during step b) the mixing chamber 42 is at least partially brought to a pressure greater than atmospheric pressure.

Thanks to the supply of the air flow Fa into the mixing chamber 42 it is possible to reduce the mixing time interval and thus speed up the washing process.

To supply the air flow Fa into the mixing chamber 42, according to one aspect, the electronic control unit 5 is configured to actuate the pumping means 60 and, if present, to appropriately command the valve means 61c.

Once the mixing time interval has elapsed, the cleaning method provides for sanitizing (washing) the second dispensing circuit 7 by making the detergent solution S formed in the mixing chamber 42 flow along the secondary hydraulic line 72, and therefore, also through the heating means 31 arranged thereon (step c).

According to one aspect, in step c), the electronic control unit 5 actuates the third pump 82 which, by drawing the detergent solution S from the mixing chamber 42, supplies it along the secondary hydraulic line 72.

Preferably, the sanitizing step c) is divided into a first and a second sanitizing step c1), c2) which are performed in succession.

In the first sanitizing step c1) the detergent solution S flows along the secondary hydraulic line 72 and, after being dispensed from the dispensing nozzle 71, is re-admitted into the mixing chamber 42 - e.g. by passing through the open upper portion of the tray 42a.

In the second sanitizing step c2) the detergent solution S flows again along the secondary hydraulic line 72 to then be discharged upstream of the dispensing nozzle 71 and downstream of the heating means 31, through a special drain line 73.

According to one aspect, the second dispensing circuit 7 comprises a three-way valve 73a, commandable by the electronic control unit 5, configured to selectively direct a fluid flow towards the dispensing nozzle 71 or towards the drain line 73.

Preferably, before proceeding with the subsequent step d), downstream of the sanitizing step c), the method for cleaning the second dispensing circuit 7 provides for a pause step e), for example having a duration of 5 seconds.

Advantageously, said pause step e) increases the action time of the detergent solution, thus increasing the effectiveness of the cleaning method.

Downstream of the discharge of the detergent solution S from the secondary hydraulic line 72, the method provides for supplying hot water into the mixing chamber 42 and then along the dispensing circuit 7 to rinse the mixing chamber 42 and the dispensing circuit 7 (step d).

According to one aspect, in step d), the electronic control unit 5 is configured to actuate the second pump 81, which loads hot water into the mixing chamber 42, and the third pump 82, which transfers the hot water loaded into the mixing chamber 42 into the secondary hydraulic line 72.

Preferably, step d) provides for the alternation of a plurality of water supply acts da), in which hot water is supplied into the mixing chamber 42 and then along the secondary hydraulic line 72, with pauses dp), in which the supply of hot water along the secondary hydraulic line 72 and through the mixing chamber 42 is stopped. In other words, step d) provides for supplying the water into the secondary hydraulic line 72 in distinct supply acts interspersed with pauses.

To do this, in step d), the electronic control unit 5 is configured to actuate the third pump 82 intermittently, i.e. alternating activation phases associated with the water supply acts da) with deactivation phases associated with the pauses dp).

Advantageously, the execution of the rinsing step d) in distinct supply acts interspersed with pauses allows for increasing the rinsing efficiency, thus reducing water consumption and maximizing the removal of the detergent solution S.

According to one aspect, in each water supply act da) a same quantity of water is supplied into the secondary hydraulic line 72.

According to a further aspect, each pause step dp) has the same duration.

A good level of washing is obtainable with three water supply acts da) interspersed with pause steps dp) having a duration equal to 10 seconds.

According to one aspect, in the rinsing step d), the hot water that flows through the second dispensing circuit 7 is discharged upstream of the dispensing nozzle 71 and downstream of the heating means 31, preferably through the drain line 73.

It is worth specifying that the method for cleaning a coffee dispensing circuit 1 and that of the further second dispensing circuit 7 are executable independently of each other.

Obviously, a person skilled in the art may make numerous equivalent modifications to the variants described above, without thereby departing from the scope of protection defined by the appended claims.

## Claims

1. Method for cleaning a coffee dispensing circuit (1) of a super-automatic coffee machine (100), wherein:
- the coffee dispensing circuit (1) comprises:
- an infusion unit (2) having:
- a cylinder (20) defining an infusion cavity (21), said infusion chamber (21) having an open top (21a) and a closed bottom (21b), said infusion cavity (21) being configured to be loaded with a dose of ground coffee,
- a piston (22) insertable in the cylinder (20) through the top (21a) to define an infusion chamber (23), the cylinder (20) and the piston (22) being reciprocally movable along a movement direction (X-X) to contract or expand the infusion chamber (23),
- a hydraulic line (24) configured to supply a water flow (Fw) into the infusion chamber (23) and discharge the water flow from the infusion chamber (23),
- the method comprises the steps of:
A) bringing the infusion unit (2) into a pre-wash configuration in which the piston (22) is inserted into the cylinder (20) and arranged at the top (21a),
B) supplying a detergent (D) into the infusion chamber (23) while the infusion unit (2) is in the pre-wash configuration,
C) diluting or dissolving the detergent (D) by supplying a dose of water (A) into the infusion chamber (23) through the hydraulic line (24) so as to obtain a detergent solution (S), the supplying of the dose of water (A) taking place in several supply acts interspersed with pauses,
D) at the end of step C), reciprocally moving the cylinder (20) and the piston (22) along the movement direction (X-X) to bring the infusion unit (2) into a washing configuration in which the piston (22) is in contact with the detergent solution (S),
E) washing the coffee dispensing circuit (1) by supplying hot water along the hydraulic line (24) and through the infusion chamber (23) of the infusion unit (2), the hot water passing through the infusion chamber (23) removing the detergent solution (S).

2. Method according to claim 1, wherein the washing step E) is carried out by alternating:
- a plurality of water supply steps Eₐ), wherein the hot water is supplied along the hydraulic line (24) and through the infusion chamber (23),
with
- pause steps Eₚ), wherein the supply of hot water along the hydraulic line (24) and through the infusion chamber (23) is stopped.

3. Method according to claim 2, wherein the number of water supply steps Eₐ) is between 5 and 10.

4. Method according to any one of the preceding claims, wherein a flow of pressurized air (Fₐ) is fed into the infusion chamber (23) during step C) of diluting or dissolving of the detergent.

5. Method according to any one of the preceding claims, wherein:
- in each supply act of the diluting or dissolving step of the detergent C), an equal sub-dose (A1, A2, ... An) of said dose of water (A) is supplied,
- the pauses separating the supply acts are of equal duration.

6. Method according to any one of the preceding claims, wherein:
- the detergent solution (S) obtained in step C) has a free surface (Sp),
- in step D), to bring the infusion unit into the washing configuration, the cylinder (20) is moved relative to the piston (22) along the movement direction (X-X) until the piston (22) reaches the free surface (Sp) of the detergent solution (S).

7. Method according to any one of the preceding claims, wherein the detergent (D) is liquid.

8. Super-automatic coffee machine (100) comprising:
- a coffee dispensing circuit (1) comprising:
- an infusion unit (2) having:
- a cylinder (20) defining an infusion cavity (21) having an open top (21a) and a closed bottom (21b), said infusion cavity (21) being configured to be loaded with a dose of ground coffee,
- a piston (22) insertable in the cylinder (20) through the top (21a) to define an infusion chamber (23), the cylinder (20) and the piston (22) being reciprocally movable along a movement direction (X-X) to contract or expand the infusion chamber (23),
- kinematic members (25) configured to reciprocally move the cylinder (20) and the piston (22) along the movement direction (X-X),
- a hydraulic line (24) configured to supply a water flow (Fw) into the infusion chamber (23) and discharge the water flow (Fw) from the infusion chamber (23),
- heating members (3), arranged on the hydraulic line (24) upstream of the infusion chamber (23), configured to heat the water flow (Fw) supplied into the infusion chamber (23) through the hydraulic line (24),
- washing system (4) comprising:
- a reservoir (40) adapted to contain a detergent (D) adapted for washing the coffee dispensing circuit (1),
- detergent supply members (41) configured to supply the detergent (D) from the reservoir (40) to the infusion chamber (23),
- an electronic control unit (5) placed in signal communication with the detergent supply members (41) of the washing system (4), the kinematic members (25) of the infusion unit (2), and the heating members (3), the electronic control unit (5) being configured to implement the method for cleaning the coffee dispensing circuit (1) according to any one of the preceding claims.

9. Super-automatic coffee machine (100) according to claim 8, comprising a pressurized air supply circuit (6) provided with:
- pumping means (60), placed in signal communication with the electronic control unit (5), configured to generate a flow of pressurized air (Fₐ),
- a pneumatic line (61) adapted to convey the flow of pressurized air (Fₐ) from the pumping means to the infusion chamber (23).

10. Super-automatic coffee machine (100) according to claim 9, comprising a milk foaming circuit (7) configured to dispense foamed milk and placed in fluid-dynamic communication with the pumping means (60).
